# EUROPÄISCHE PATENTSCHRIFT

(11) **EP 2 212 571 B1**
(45) Veröffentlichungstag und Bekanntmachung des Hinweises auf die Patenterteilung: **21.12.2011**
(21) Anmeldenummer: 08848732.7
(22) Anmeldetag: 10.11.2008
(51) Int. Cl.: F16C 9/00, F16C 17/10, F16C 43/02

(54) **ANLAUFSCHEIBE UND RADIAL-AXIAL-LAGER MIT EINER SOLCHEN**
THRUST WASHER AND RADIAL/AXIAL BEARING HAVING SUCH A THRUST WASHER
BAGUE DE PORTÉE ET PALIER RADIAL-AXIAL DOTÉ D'UNE TELLE BAGUE

(30) Priorität: 14.11.2007 DE 102007055005
(43) Veröffentlichungstag der Anmeldung: 04.08.2010
(73) Patentinhaber: Federal-Mogul Wiesbaden GmbH, 65201 Wiesbaden (DE)
(72) Erfinder: LEHMANN, Uwe, 55232 Alzey (DE); KLIER, Jürgen, 65232 Taunusstein (DE); GROOTEBOER, Thomas, 55270 Essenheim (DE)
(74) Vertreter: Mehler Achler
(86) Internationale Anmeldenummer: PCT/EP2008/065211
(87) Internationale Veröffentlichungsnummer: WO 2009/062904

(56) Entgegenhaltungen:
- EP-A- 0 307 984
- EP-B1- 1 320 690
- DE-A1- 2 412 870
- DE-A1- 2 528 576
- DE-A1- 3 345 652
- DE-A1- 4 015 256
- DE-A1- 4 140 277
- DE-A1- 19 825 117
- DE-A1-102004 014 410
- DE-C1- 4 303 855
- GB-A- 2 225 392
- US-A- 4 133 586

## Beschreibung

Die Erfindung betrifft eine Anlaufscheibe in Form eines halbkreisförmigen Flanschringes mit wenigstens zwei am inneren Rand der Anlaufscheibe radial einwärts gerichteten äußeren Verbindungslaschen zur Verbindung mit einem Radiallagerteil, welche in Umfangsrichtung beidseits einer gedachten Mittellinie der Anlaufscheibe angeordnet sind und jeweils eine der Mittellinie zugewandte Innenkante und eine der Mittellinie abgewandte Außenkante aufweisen. Die Erfindung betrifft ferner ein Radial-Axial-Lager mit einem Radiallagerteil und einer mit dem Radiallagerteil verbundenen Anlaufscheibe solcher Art.

Radial-Axial-Lager kommen beispielsweise im Motorenbau als Kurbelwellenlager oder dgl. zum Einsatz. Der Radiallagerteil kann als halbzylindrische Lagerschale oder als Buchse ausgebildet sein. Das Radial-Axial-Lager kann an einem oder beiden stirnseitigen (axialen) Enden mit jeweils einer Antaufscheibe verbunden sein. Die Bezeichnung "halbkreisförmiger Flanschring" schließt im Sinne der Erfindung auch solche Formen der Anlaufscheibe ein, deren umfängliche Enden tatsächlich über die halbierende Teilebene oder Sehne hinausgehen. Solche Formen sind beispielsweise aus der EP 1 320 690 A bekannt und dienen der Vergrößerung der Fläche der Anlaufscheibe oder als Montagehilfe.

Es sind grundsätzlich zwei Bauformen zur Verbindung der Anlaufscheibe(n) mit dem Radiallagerteil bekannt. Bei den so genannten gebauten Lagern werden der Radiallagerteil und die Anlaufscheibe mittels entsprechend ausgestalteter Laschen an der Anlaufscheibe und korrespondierender Halteöffnungen an dem Radiallagerteil miteinander formschlüssig und unverlierbar verklinkt. Ausführungsformen solcher gebauter Lager sind beispielsweise aus der DE 43 03 855 C1, der DE 33 45 652 A1, der DE 41 40 277 A1 oder der EP 0 307 984 A2 bekannt. Die Montage der Lager (mit dem Begriff "Montage" wird nachfolgend der Zusammenbau des Axial- und des Radiallagerteils zu einem Radial-Axial-Lager bezeichnet) erfordert aufgrund der komplexen Zuführ- und Einklinkbewegung bzw. aufgrund zusätzlicher Arbeitsschritte, in denen die Laschen nach dem Zusammenführen der Bauteile verstemmt werden, ein spezielles Werkzeug bzw. einen speziell eingerichteten Montageautomaten. Die Montage wird deshalb nicht selten unter manuellen Eingriffen ausgeführt. Ferner weisen die Verbindungslaschen und/oder Halteöffnungen komplizierte und damit fertigungstechnisch aufwendige Geometrien auf, die eine sichere Verbindung zwischen den beiden Bauteilen im verklinkten Zustand gewährleisten.

In der zweiten Bauform sind die Radial-Axial-Lager miteinander verschweißt. Der Radiallagerteil weist bei dieser Bauform stirnseitig Ausnehmungen auf, in welche die Verbindungslaschen der Anlaufscheibe in axialer Zuführrichtung eingesetzt werden.

Eine Lagerhalbschale weist in der Regel eine Spreizung auf, d. h. ihre Grundform ist im Gegensatz zur Anlaufscheibe nicht exakt halbkreisförmig sondern leicht (in der Regel wenige Zehntel Millimeter) aufgebogen. Die Spreizung wird beim Einbau des Halblagers in den dafür vorgesehenen Lagersitz eines Lagergehäuses bzw. -deckels (mit dem Begriff "Einbau" wird nachfolgend nur genau dies bezeichnet) aufgehoben, indem die Lagerschale elastisch zusammengedrückt wird. Durch die elastische Rückstellkraft wird ein Kraftschluss zwischen der Lagerschale und dem Lagersitz erzielt, der die Lagerschale im eingebauten Zustand fixiert und somit der Einbau erleichtert.

Zuvor muss üblicherweise die Spreizung je nach Geometrie der Verbindungslaschen auch bei der Montage der Lagerschale und der Anlaufscheibe aufgehoben werden, bis die Verbindungslaschen und die Ausnehmungen fluchten. Auch hier sorgt die elastische Rückstellkraft nach der Montage für einen kraftschlüssigen Zusammenhalt von Lagerschale und Anlaufscheibe. Ist die Spreizung aber schon durch die Montage des Lagers aufgehoben, stellt sich der oben geschilderte Kraftschluss mit dem Lagersitz bei Einbau nicht mehr oder nicht ausreichend ein.

Da die Anlaufscheibe und die Lagerhalbschale bei dieser Bauform nach der Montage in der Regel zwar kraftschlüssig aber nicht unverlierbar miteinander verbunden sind, werden sie nach dem Zusammenführen an einer oder mehreren Stellen des Außenumfangs der Lagerhalbschale stirnseitig durch Schweißen miteinander verbunden. Beispielhaft wird auf die DE-OS 25 28 576 A1 oder die DE-OS 24 12 870 A1 (letztere ohne expliziten Hinweis auf eine Schweißverbindung) verwiesen. Nachteilig ist, dass auch hier eine spezielle Montagevorrichtung benötigt wird, die eine Entspreizung der Lagerhalbschale vorsieht, und ein speziell für die axiale Zuführung der Anlaufscheibe eingerichteter Montageautomat erforderlich ist.

Aus der DE 40 15 256 A1 ist ein Radial-Axial-Gleitlager bekannt, bei dem die Anlaufscheibe wenigstens eine radial nach innen vorstehende, schwalbenschanzförmige Verbindungslasche aufweist, die in eine komplementäre Aussparung des Radiallagerteils eingreift, die sich in radialer Richtung verjüngt. Die Aussparung ist in radialer Richtung also an die Neigung der Schenkel und Außenkanten der schwalbenschwanzförmigen Befestigungslasche angepasst, so dass das Axiallagerteil sowohl in Umfangsrichtung als auch in radialer Richtung bezüglich des Radiallagerteils fixiert ist.

Die DE 198 25 117 A1 offenbart ein Radial-Axial-Lager, bei dem die Verbindungslaschen der Anlaufscheibe in radialer Richtung durch den Scheitelpunkt der Bundlagerschale oder parallel hierzu betrachtet hinterschnittfrei ausgebildet sind und in dieser Richtung in allseits umschlossene Halteöffnungen in dem Radiallagerteil einführbar sind.

Aus der GB 2 225 392 A ist eine Bundlagerhalbschale bekannt, bei der die Anlaufscheibe eine in axialer Richtung von dem Radiallagerteil weg konisch zulaufende Verbindungslasche aufweist. Die Montage der beiden Teile erfolgt, indem die Anlaufscheibe mit der Haltelasche in eine rechteckige stirnseitige Ausnehmung in dem Radiallagerteil eingesetzt wird und die Ecken der Ausnehmung anschließend so umgeformt werden, dass sie eine Hinterschneidung bilden und die keilförmige Verbindungslasche in axialer Richtung fixieren.

Aufgabe der Erfindung ist es, die Anlaufscheibe bzw. das Radial-Axial-Lager so zu gestalten, dass es eine vereinfachte und kostengünstige Montage bei gleichzeitig einfacher und kostengünstiger Ausgestaltung der Bauteile ermöglicht. Weiteres Bestreben ist es, das Radial-Axial-Lager hinsichtlich der Lastaufnahmekapazität der Axiallagerung zu verbessern.

Die Aufgabe wird durch eine Anlaufscheibe gemäß Patentanspruch 1 und durch ein Radial-Axial-Lager gemäß Patentanspruch 7 gelöst.

Die Anlaufscheibe ist erfindungsgemäß dadurch weitergebildet, dass die Innenkanten mit einer in der Mitte der Verbindungslasche an den von der Anlaufscheibe beschriebenen Halbkreis angelegten Tangente auf der Innenseite einen Winkel einschließen, der zwischen 45° und 85° liegt, und dass die Außenkante parallel zu der jeweiligen Innenkante verläuft und die äußeren Verbindungslaschen beabstandet von einer den Flanschring halbierenden Teilebene angeordnet sind.

Entsprechend ist das Radial-Axial-Lager dadurch weitergebildet, dass die äußeren Verbindungslaschen in korrespondierende, stirnseitige äußere Ausnehmungen in dem Radiallagerteil eingreifen, welche jeweils eine der Mittellinie der Anlaufscheibe zugewandte Innenkante, die mit einer im Mittelpunkt der Ausnehmungen an den von dem Radiallagerteil beschriebenen Kreis oder Halbkreis angelegten Tangente auf der Innenseite einen Winkel einschließt, der zwischen 45° und 85° liegt, und jeweils eine der Mittellinie der Anlaufscheibe abgewandte Außenkante aufweisen, die parallel zu der jeweiligen Innenkante verläuft und die Ausnehmungen beabstandet von einer den Flanschring halbierenden Teilebene angeordnet sind.

Als Winkel "auf der Innenseite" wird jeweils der Winkel verstanden, der, beginnend an der Innenkante, von der Verbindungslasche weg in Richtung der Mittellinie bis zu der Tangente aufgetragen ist.

Die erfindungsgemäße Geometrie der Verbindungslaschen und der Ausnehmungen verbessert den Formschluss zwischen der Anlaufscheibe und dem Radiallagerteil im Hinblick auf die spezifischen Lastsituationen, die bei den gattungsgemäßen Radial-Axial-Lagern auftreten. Aufgrund des spitzen Winkel zwischen 45° und 85°, bevorzugt zwischen 55° und 75° und besonders bevorzugt zwischen 60° und 70°, hält das erfindungsgemäße Radial-Axial-Lager höheren auf die Anlaufscheibe wirkenden Kräften bzw. Momenten ohne zusätzliche Maßnahmen, wie beispielsweise zusätzliche Abstützungen oder Verklinkungen zur Aufnahme von Drehmomenten, stand.

Vorteilhaft ist auch, dass die erfindungsgemäße Geometrie jeweils paralleler Innen- und Außenkanten der Lagerschale sowie die komplementäre Geometrie des Radiallagerteils fertigungstechnisch einfacher herzustellen ist. Dabei ergibt sich eine Kostenersparnis in zweierlei Hinsicht. Zum einen lassen sich Kosten bei der Herstellung des Radiallagerteils ersparen, indem die komplementären parallelen Innen- und Außenkanten in einem Stanz-Biege-Automaten ohne Umspannen des Werkstückes nach dem Umbiegen der Platine zu einer Halbschale oder zu einer Buchse in einem einfachen Stanzvorgang ausgestanzt werden können. Demgegenüber erfordert die zu der Schwalbenschwanzgeometrie komplementäre Geometrie der Ausnehmung aus der D1 eine Nachbearbeitung des Radiallagerteils durch Fräsen. Der zeitliche, maschinelle und personelle Mehraufwand erhöht die Kosten und gleichzeitig das Fehlerrisiko der Fertigung. Zum anderen ergibt sich die Kostenersparnis aus dem Umstand, dass die parallelen Außenkanten einen effektiven Sparschnitt beim Ausstanzen der Anlaufscheiben aus einem Band erlauben. Die Ausstanzungen können dichter aufeinander folgen, so dass weniger Abfall anfällt. Wollte man bei den Anlaufscheiben gemäß Entgegenhaltung 1 einen Sparschnitt realisieren, wäre dies nur möglich, indem die äußeren Verbindungslaschen in Umfangsrichtung nach innen versetzt würden, was wiederum zu einer verringerten Belastbarkeit führen würde, wie nachfolgend anhand der Figuren erläutert werden wird. Vorteilhafter Weise sind die äußeren Verbindungslaschen der Anlaufscheibe und entsprechend auch die Ausnehmungen des Radiallagerteils beabstandet von einer den Flanschring halbierenden Teilebene angeordnet.

Gleichzeitig lässt sich bei der gattungsgemäßen Anlaufscheibe so, aufgrund der von der Teilebene in Umfangsrichtung einwärts versetzt angeordneten Verbindungslaschen ein Sparschnitt realisieren, wodurch Materialkosten eingespart werden können.

Vorteilhaft ist es ferner, wenn die Innenkanten der äußeren Verbindungslaschen und entsprechend die Innenkanten der Aussparungen parallel zur Teilebene verlaufen oder einen Winkel mit dieser einschließen, der nicht größer als ±15°, bevorzugt nicht größer als ±10° und besonders bevorzugt nicht größer als ±5° ist.

Das erfindungsgemäße Radial-Axial-Lager kann in einer Ausführungsform der Erfindung als Lagerhalbschale ausgebildet sein. In diesem Fall muss aufgrund der erfindungsgemäßen Geometrie und Anordnung der Verbindungslaschen bzw. der Aussparungen dieser Ausgestaltung die Spreizung der Lagerhalbschale bei der Montage nicht aufgehoben werden. Die umfangsseitigen Enden der Lagerhalbschale sind in radialer Richtung im Umfang der Spreizung frei beweglich, das heißt durch die Geometrie der Verbindungslaschen in ihrer Bewegung nicht behindert. Hierdurch wird die Spreizung vollständig erst beim Einbau des Lagers in den Lagersitz aufgehoben und der Kraftschluss zwischen Radiallagerteil und Lagersitz fixiert das Lager nach dem Einbau. Das heißt aber auch, dass die Lagerhalbschale und die Anlaufscheibe nicht durch Klemmung kraftschlüssig zusammengehalten werden. Zur Erleichterung der Montage muss deshalb entweder eine form- oder eine stoffschlüssige Verbindung eingesetzt werden.

Bevorzugt sind die Verbindungslaschen symmetrisch zur Mittellinie angeordnet.

Durch eine symmetrische Anordnung der Verbindungslaschen ist dieselbe hohe Lastaufnahmekapazität unabhängig von der Ausrichtung der Lagerschale im Lagersitz bzw. von der Drehrichtung des Gegenläufers (z.B. Kurbelwelle) erzielbar.

Die erfindungsgemäße Anlaufscheibe weist bevorzugt weiterhin eine dritte, am inneren Rand angeordnete radial einwärts gerichtete mittlere Verbindungslasche auf, welche versetzt zur Mittellinie angeordnet ist.

Durch die asymmetrische Anordnung und eine entsprechend asymmetrische Ausrichtung der korrespondierenden Halteöffnungen in dem Radiallagerteil ist die Orientierung der Anlaufscheibe relativ zu dem Radiallagerteil unverwechselbar festgelegt. Durch diese Maßnahme kann eine versehentlich falsche Orientierung der Anlaufscheibe bei der Montage mit dem Radiallagerteil ausgeschlossen werden.

Gemäß einer vorteilhaften Weiterbildung weist die Anlaufscheibe an ihrem inneren Rand angeordnete, radial einwärts gerichtete Abstützungen auf.

Die Abstützungen bilden Anlageflächen, die einen definierten Abstand und eine koaxiale Ausrichtung zwischen der Anlaufscheibe und einem Radiallagerteil sicherstellen. Sie wirken in an sich bekannter Weise mit den Verbindungslaschen zur Drehmomentabstützung zusammen.

Die Anlageflächen sind dabei vorzugsweise symmetrisch beidseits der Mittellinie und innerhalb der zwei äußeren Verbindungslaschen angeordnet.

Die symmetrische Anordnung stellt abermals einen richtungsunabhängigen Einbau des Lagers sicher. Die Anordnung innerhalb der zwei äußeren Verbindungslaschen stellt wiederum die freie Beweglichkeit in radialer Richtung der umfänglichen Enden des Radiallagerteils sicher.

Die Anlaufscheibe ist gemäß einer vorteilhaften Weiterbildung des Radial-Axial-Lagers mit dem Radiallagerteil mittels einer Schweißverbindung verbunden. Der Zusammenhalt zwischen Radiallagerteil bzw. Lagerhalbschale und der Anlaufscheibe wird also bevorzugt durch eine stoffschlüssige Verbindung hergestellt.

Die Schweißverbindung ist bevorzugt durch Laserschweißen oder durch Punktschweißen erfolgt. Besonders bevorzugt ist diese Schweißverbindung als Sollbruchstelle ausgelegt, die bei Einleitung einer bestimmten tangentialen und/oder radialen und/oder axialen Kraft durch die betriebsbedingte Belastung bricht.

Wie beispielsweise auch aus der DE 10 2004 014 410 A1 bekannt ist, dient die Schweißverbindung somit als temporäre Verbindung für den Transport und zur Vereinfachung der Montage. Zum Ausgleich von toleranzbedingten Ungenauigkeiten des Lagergehäuses oder des Gegenläufers ist ein geringes axiales und radiales Spiel zwischen der Anlaufscheibe und dem Radiallagerteil erwünscht. Deshalb soll die starre Schweißverbindung im Betrieb aufbrechen und der Axiallagerteil (die Anlaufscheibe) und der Radiallagerteil für eine Relativbewegung freigegeben werden. Die Schweißparameter sind daher so einzustellen, dass die Schweißverbindung den durch das Drehmoment beim Anlaufen des Gegenläufers (der Kurbelwelle oder dergleichen) auf die Schweißverbindung ausgeübten Kräften in tangentialer Richtung nicht standhält. Eine Auslegung der Schweißverbindung ist je nach Anwendungsfall, Lagergröße, Kontaktfläche zwischen Gegenläufer und Anlaufscheibe, Werkstoffkombination (Lagerwerkstoff und Gegenläufer) etc. zu ermitteln.

Bevorzugt ist die Anlaufscheibe mit dem Radiallagerteil im Scheitelbereich verschweißt. Sie weist zu diesem Zweck besonders bevorzugt an ihrem inneren Rand einen radial einwärts gerichteten Ansatz auf.

Beim Entspreizen werden nur die umfänglichen Enden der Lagerschale in radialer Richtung zusammengedrückt. Im Scheitelbereich, also dem Symmetriezentrum der Lagerschale soll keine Relativbewegung zwischen der Lagerschale und der Anlaufscheibe stattfinden. Deshalb wird bevorzugt hier die Schweißverbindung angeordnet.

Der Radiallagerteil des erfindungsgemäßen Radial-Axial-Lagers ist vorzugsweise eine Lagerhalbschale.

Weitere Aufgaben, Merkmale und Vorteile der Erfindung werden nachfolgend anhand eines Ausführungsbeispieles mit Hilfe der Zeichnungen näher erläutert. Es zeigen:
- Figur 1: ein Ausführungsbeispiel des erfindungsgemäßen Radial-Axial-Lagers in dreidimensionaler Darstellung;
- Figur 2: das Ausführungsbeispiel gemäß Figur 1 in der Seitenansicht;
- Figur 3A-3D: das erfindungsgemäße Radial-Axial-Lager in vier verschiedenen Belastungsfällen;
- Figur 4A-4C: das erfindungsgemäße Radial-Axial-Lager (Figur 4C) im Vergleich zum Stand der Technik (Figuren 4A 4B);
- Figur 5: ein Balkendiagramm mit den maximalen Belastungsmomenten in Abhängigkeit vom Belastungsfall und der Lagergeometrie,
- Figur 6A-6D: eine weitere Gegenüberstellung des erfindungsgemäßen Radial-Axial-Lagers (Figur 6C) im Vergleich zum Stand der Technik (Figuren 6A und 6D), und
- Figur 7: ein zweidimensionales Diagramm, welches die Relation zwischen einem Verdrehwinkel und einem Verdrehmoment für die drei Bauformen gemäß Figuren 6A bis 6D wiedergibt.

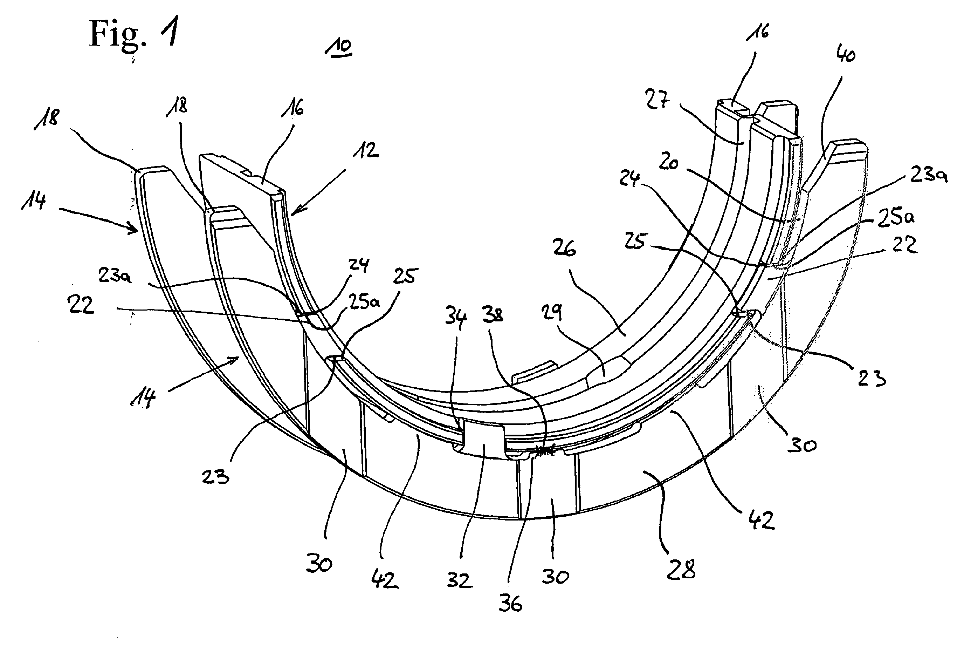

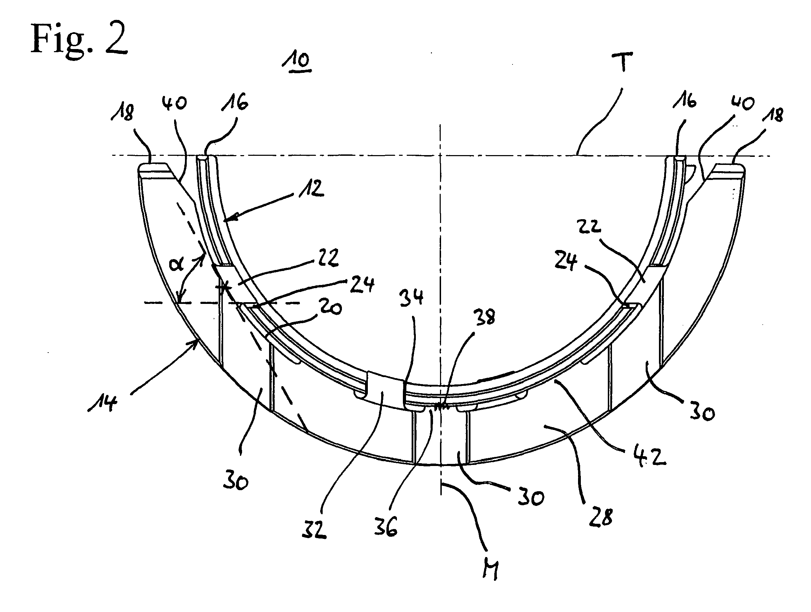

Das erfindungsgemäße Radial-Axial-Lager 10 gemäß Figuren 1 und 2 weist einen Radiallagerteil 12 in halbzylindrischer Form (Lagerhalbschale), der in Umfangsrichtung an den so genannten Teilflächen 16 endet, sowie jeweils eine an dessen axialen (oder stirnseitigen) Enden angeordnete Anlaufscheiben 14 in Form eines halbkreisförmigen Flanschringes auf. Dargestellt ist in den Figuren die so genannte Oberschale eines Kurbelwellen-Hauptlagers, zu welcher eine (nicht dargestellte) komplementäre Unterschale existiert. Oberschale und Unterschale werden in einem Lagergehäuse mit den Teilflächen 16 bündig aufeinander liegend zu einem zylindrischen Lager zusammengefügt.

Die umfänglichen Enden 18 der Anlaufscheiben 14 sind in Umfangsrichtung gegenüber den Teilflächen 16 des Radiallagerteils zurückversetzt, also kürzer, so dass sie im zusammengesetzten Zustand des Lagers nicht die Anlaufscheiben der korrespondierenden Oberschale berühren und somit einzeln frei beweglich in ihrem Lagersitz angeordnet sind. Als Teilebene im Sinne der Patentansprüche ist die das Lager 10 halbierende Ebene gemeint, welche in der Darstellung der Figur 2 als strichpunktierte Linie T eingezeichnet ist und in der auch die Teilflächen 16 liegen.

Die Anlaufscheiben 14 weisen zwei an ihrem inneren Rand 20 radial einwärts gerichtete äußere Verbindungslaschen 22 auf, welche in korrespondierende, radial äußere und axial stirnseitige Ausnehmungen 24 in dem Radiallagerteil 12 eingreifen und auf diese Weise eine formschlüssige Verbindung zwischen der Anlaufscheibe 14 und dem Radiallagerteil 12 schaffen.

Die Verbindungslasche 22 weist eine der Mittellinie M zugewandte Innenkante 23 und die korrespondierenden Ausnehmung 24 eine der Mittellinie M zugewandte Innenkante 25 auf. Zwischen den beiden Innenkanten 23 und 25 ist ein Spiel zu erkennen, welches notwendig ist, um die Lagerhalbschale 12 bei der Montage des Radial-Axial-Lagers 10 an deren im Bereich der Teilflächen 16 liegenden umfänglichen Enden radial einwärts zusammendrücken und die (nicht zu erkennende) Spreizung aufheben zu können. Hierbei werden die beiden, freien Enden der Lagerhalbschale 12 relativ zu der Anlaufscheibe 18 elastisch radial einwärts gebogen, wodurch sich gleichzeitig die Innenkante 25 der Ausnehmung 24 gegenüber der Innenkante 23 der Verbindungslasche 22 soweit anhebt, bis beide Innenkanten 23, 25 formschlüssig aneinander anliegen.

Der Radiallagerteil 12 ist bekanntermaßen entlang seiner radial innen liegenden Lauffläche 26 mit einem Lagermetall und/oder einer Gleitschicht beschichtet. Auch die Anlaufscheibe 14 ist auf ihrer axial nach außen gerichteten Lauffläche 28 mit einem Lagermetall und/oder einer Gleitschicht versehen. Die Lauffläche 28 der Anlaufscheibe 14 ist durch drei Nuten 30 unterbrochen, welche zur Versorgung des Lagers mit Schmiermitteln dienen und die Lauffläche 28 in 4 Segmente unterteilt. Die Lauffläche 26 des Radiallagerteils weist eine umlaufende Ölnut 27 und eine Ölbohrung 29 auf. Die vorgenannten Details sind beispielhaft und nicht als beschränkend zu verstehen. Insbesondere kann die Lauffläche der Anlaufscheibe durch weniger oder mehr als 3 Nuten unterteilt sein und die Lauffläche des Radiallagerteils ohne Ölnut und mit anderen Strukturen und/oder Profilen versehen sein.

Die Anlaufscheibe 14 weist ferner eine dritte, an ihrem inneren Rand angeordnete, radial einwärts gerichtete, mittlere Verbindungslasche 32 auf, welche versetzt zur Mittellinie M angeordnet ist und in eine korrespondierende Ausnehmung 34 in dem Radiallagerteil 12 eingreift. Wie am besten in Figur 1 zu erkennen ist, besteht zwischen der mittleren Verbindungslasche 32 und der mittleren Ausnehmung 34 ein geringeres Spiel, so dass an dieser Stelle zwischen dem Radiallagerteil 12 und der Anlaufscheibe 14 keine signifikante Relativbewegung in umfänglicher Richtung zugelassen wird. Alle drei Verbindungslaschen 22, 32 definieren in Verbindung mit den korrespondierenden Ausnehmungen 24, 34 im montierten und eingebauten Zustand des Lagers 10 sowohl die radiale Position als auch die Winkelposition der Anlaufscheibe 14 relativ zu dem im Lagersitz fixierten Radiallagerteil 12.

Nur zu Montagezwecken werden die Anlaufscheibe 14 und der Radiallagerteil 12 im Bereich des Scheitelpunktes an einem eigens hierfür vorgesehenen, radial einwärts gerichteten Vorsprung 36 an der Anlaufscheibe 14 mittels einer Schweißverbindung 38 aneinander fixiert. Hiernach sind die Anlaufscheibe 14 und der Radiallagerteil 12 bis zum bestimmungsgemäßen Einsatz unverlierbar miteinander verbunden. Die Schweißverbindung 38 ist so ausgelegt, dass sie durch die betriebsbedingte Belastung beispielsweise beim Anlauf der gelagerten Welle bricht. Da die drei Ausnehmungen 24, 34 jeweils stirnseitig offen sind, haben die Anlaufscheibe 14 im Betrieb in axialer Richtung Bewegungsfreiheit. Hierdurch ergibt sich in dem Lagersitz ein hinreichendes Spiel zwischen der Anlaufscheibe 14 und dem Radiallagerteil 12, welches Fertigungstoleranzen der Lagerelemente (Lagersitz, Lagergehäuse, Radial-Axiallager) und/oder des Gegenläufers (Kurbelwelle etc.) und daraus resultierende Rundlaufungenauigkeiten kompensiert.

Die zwei äußeren Verbindungslaschen 22 sind in Umfangsrichtung beidseits der Mittellinie M und symmetrisch zu dieser angeordnet. Sie sind ferner von der den Flanschring halbierenden Teilebene T in Umfangsrichtung - hier um etwa 1/6 der Umfangslänge des inneren Randes 20 - einwärts beabstandet angeordnet. Entscheidend für das Maß des Abstandes zu der Teilebene sind verschiedene Kriterien: Die Anordnung muss sicherstellen, dass der Radiallagerteil 12 in den umfänglichen Endbereichen nahe der Teilflächen 16 in radiale Richtung hinreichend frei beweglich ist.

Die Anlaufscheibe 14 soll im an sich bekannten Sparschnitt ausgestanzt werden, bei dem möglichst wenig Verschnitt in dem Zwischenraum zweier aufeinander folgender aus einem Bandmaterial ausgestanzter Anlaufscheiben entsteht. Der Sparschnitt ist im Beispiel der Figuren 1 und 2 an den nahe den umfänglichen Enden angeordneten bogenförmigen Ausnehmungen 40 erkennbar.

Wie in Figur 1 am besten zu erkennen ist, weisen die äußeren Verbindungslaschen 22 ferner jeweils eine der Mittellinie abgewandte Außenkante 23a auf, die parallel zu der jeweiligen Innenkante 23 verläuft. Dies hat einerseits den Vorteil, dass der Radiallagerteil 12 in einem fertigungstechnisch einfachen Arbeitsschritt mit den korrespondierenden Ausnehmungen 24 mit ebenfalls parallelen Innen- und Außenkanten 25 bzw. 25a ausgebildet werden kann. Der Stanzschritt erfolgt vorzugsweise in einem Stanz-Biege-Automaten, in dem eine aus einem Bandmaterial ausgestanzte Platine zu dem halbschalenförmigen Radiallagerteil 12 umgeformt und anschließend ohne Umspannen des Werkstückes gestanzt werden kann. Zum anderen hat diese Geometrie den Vorteil, dass die Verbindungslasche 22 in Umfangsrichtung weiter außen angeordnet werden kann, ohne einem Sparschnitt im Wege zu sein. Die weit außen angeordneten Verbindungslaschen 22 sorgen dabei für eine größtmögliche Drehmomentabstützung, die einem Verdrehen der Anlaufscheibe 14 gegenüber dem Radiallagerteil 12 entgegenwirkt.

Die Anlaufscheibe 14 weist ferner zwei an ihrem inneren Rand 20 angeordnete, radial einwärts gerichtete Abstützungen 42 auf, welche symmetrisch zur Mittellinie M beidseits derselben und noch innerhalb der zwei äußeren Verbindungslaschen 22 angeordnet sind. Diese Anordnung der Abstützungen 42 nahe der Mittellinie M behindert die freie radiale Bewegung der umfänglichen Enden der Lagerschale 12 nicht, definiert andererseits aber den radialen Abstand zwischen der Anlaufscheibe 14 und dem Radiallagerteil 12. Zweck der Abstützung 42 ist es ferner, bei betriebsbedingter Belastung der Anlaufscheibe, diese im Zusammenwirken mit den Verbindungslaschen 22, 32 in radialer Richtung gegen den im Lagersitz fest fixierten Radiallagerteil 12 abzustützen.

Die Erfindung sieht vor, wie in Figur 2 anhand von Hilfslinien erkennbar ist, dass die Innenkanten 23 und 25 der äußeren Verbindungslaschen 22 bzw. Ausnehmungen 24 mit der im Mittelpunkt der Verbindungslasche oder Ausnehmung an den von der Anlaufscheibe (oder Lagerschale) beschriebenen Halbkreis angelegten Tangente einen Winkel α einschließt, der zwischen 45° und 85°, bevorzugt zwischen 55° und 75° und besonders bevorzugt zwischen 60° und 70°, in dem gezeigten Aufführungsbeispiel bei 65° liegt. Gleichzeitig sind im Falle des Beispiels gemäß Figur 1 und 2 die Innenkanten 23 und 25 parallel zur Teilebene T ausgerichtet, wobei eine Abweichung von der Parallelität um einen Winkel, der nicht größer als ±15°, bevorzugt nicht größer als ±10° und besonders bevorzugt nicht größer als ±5° ist, im Hinblick auf die Wirkung der erfindungsgemäßen Geometrie tolerabel ist.

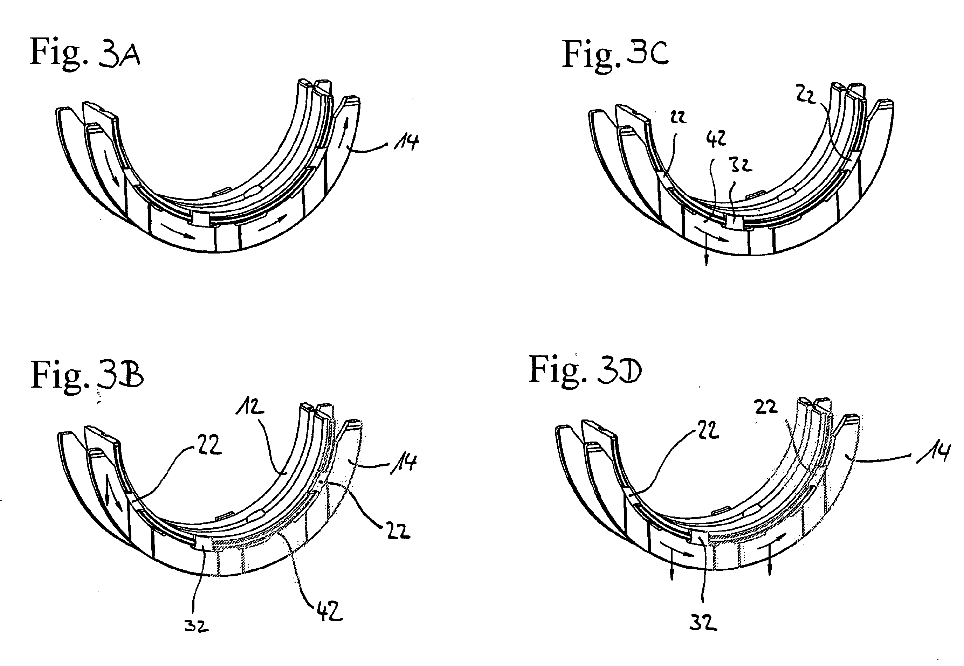

In den Figuren 3A bis 3D sind vier Belastungsfälle exemplarisch skizziert, welche nachfolgend einer vergleichenden Analyse der Belastungsfähigkeit des erfindungsgemäßen Radial-Axial-Lagers und zweier bekannter Radial-Axial-Lager zugrunde gelegt werden.

In Figur 3A ist ein Belastungsfall skizziert, bei welchem ein reines Drehmoment auf die Anlaufscheibe 14 um den Mittelpunkt des Lagers, d. h. den Schnittpunkt zwischen der Teilebene T und der Mittellinie M wirkt. Dies stellt aufgrund von Fertigungstoleranzen einen in der Praxis kaum wahrscheinlichen Belastungsfall dar.

In Figur 3B ist ein Belastungsfall dargestellt, bei welchem nur im linken äußeren Segment der Lauffläche der Anlaufscheibe 14 ein Drehmoment um den Mittelpunkt des Lagers und überlagert eine vertikal nach unten gerichtete Kraft angreift. Die resultierende Kraft wird im Wesentlichen von der Innenkante 23 der linken Verbindungslasche 22 über die Innenkante 25 der Ausnehmung 24 und zu einem geringen Teil aufgrund eines Kippmoments von der mittleren Verbindungslasche 32 sowie der äußeren (oberen) Kante der rechten äußeren Verbindungslasche 22 der Anlaufscheibe 14 über die jeweils korrespondierenden Kanten der Ausnehmungen 24 bzw. 34 abgeleitet.

In Figur 3C ist ein Belastungsfall dargestellt, in welchem nur im linken inneren Segment der Lauffläche der Anlaufscheibe 14 ein Drehmoment um den Mittelpunkt des Lagers und überlagert eine vertikal nach unten gerichtete Kraft angreift. Die hieraus resultierende Kraft wird im Wesentlichen von der Innenkante 23 der linken Verbindungslasche 22 über die Innenkante 25 der linken Ausnehmung 24 und zu einem geringen Teil auch von der Innenkante 23 der rechten Verbindungslasche 22 über die Innenkante 25 der rechten Ausnehmung 24 und von der rechten Kante der mittleren Verbindungslasche 32 über die korrespondierende Kante der Ausnehmungen 34 abgeleitet.

Schließlich ist in Figur 3D ein Belastungsfall dargestellt, in welchem in beiden mittleren Segmenten der Lauffläche der Anlaufscheibe 14 jeweils ein Drehmoment um den Mittelpunkt des Lagers und überlagert jeweils eine senkrecht zur Teilebene abwärts gerichtete Kraftkomponente angreifen. Die hieraus resultierende Kraft wird wie im Belastungsfall von Fig. 3C im Wesentlichen von der Innenkante 23 der linken Verbindungslasche 22 über die Innenkante 25 der linken Ausnehmung 24 und zu einem verglichen mit dem Fall aus Figur 3C größeren Teil auch von der Innenkante 23 der rechten Verbindungslasche 22 über die Innenkante 25 der rechten Ausnehmung 24 und zu einem geringeren Teil von der rechten Kante der mittleren Verbindungslasche 32 über die korrespondierende Kante der Ausnehmungen 34 abgeleitet.

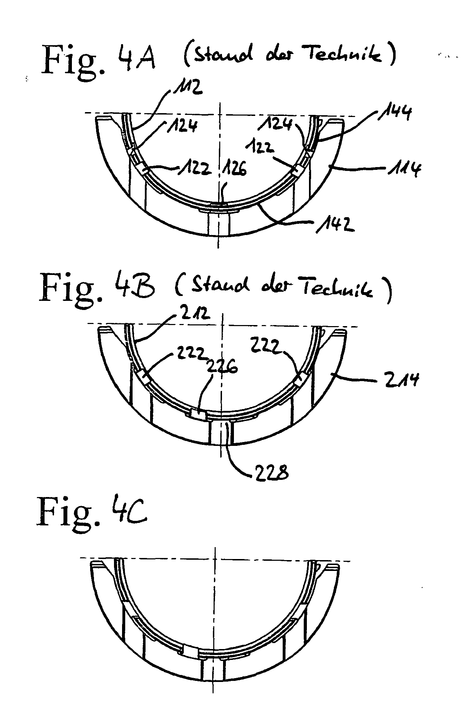

In den Figuren 4A und 4B sind zwei Radial-Axial-Lager (genauer Lagerhälften) gemäß Stand der Technik gezeigt. Figur 4A zeigt ein so genanntes gebautes Bundlager, bei welchem die Anlaufscheibe 114 formschlüssig mittels zweier äußerer Verbindungslaschen 122 sowie weiterer äußerer verklinkter oder eingehakter Verbindungslaschen 124 und einer zentralen axial fixierten Verbindungslasche 126 mit dem Radiallagerteil 112 verbunden ist. Ferner sorgen für eine formschlüssige Verbindung neben den beiden inneren Abstützungen 142 jeweils in Umfangsrichtung außerhalb der Verbindungslaschen 122, 124 angeordnete äußere Abstützung 144.

In Figur 4B ist ein punktgeschweißtes Radial-Axial-Lager bzw. eine Lagerhälfte bekannter Bauart dargestellt, bei welcher die äußeren Verbindungslaschen 222 eine herkömmliche Geometrie mit radial verlaufenden Innen- und Außenkanten aufweisen. Die mittlere Verbindungslasche 226 ist anders als im Beispiel der Figur 4A und identisch mit der erfindungsgemäßen Ausführungsform asymmetrisch angeordnet, so dass die Anlaufscheibe 214 an ihren symmetrisch zur Mittellinie angeordneten Vorsprung 228 mit dem Radiallagerteil 212 verschweißt werden kann. Ansonsten entspricht die Bauform gemäß Figur 4B der der Lagerhälfte gemäß Figur 4A.

Figur 4C zeigt die erfindungsgemäße Anlaufscheibe, die unter Bezugnahme auf die Figuren 1 und 2 vorgestellt wurde. Alle drei Anlaufscheiben gemäß Figuren 4A bis 4C haben bis auf die vorstehend beschriebenen Einzelheiten gleiche Dimensionen und Materialeigenschaften.

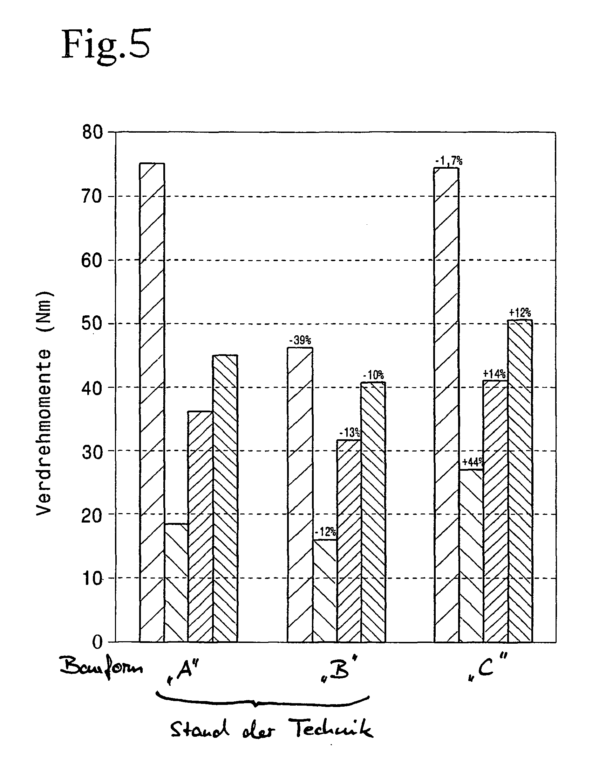

Die Durchführung einer Simulationsrechnung gemäß Figuren 3A bis 3B ergab die aus Figur 5 ersichtlichen Belastungsgrenzen. Von links nach rechts sind die vier Ergebnisse gemäß Figuren 3A, 3B, 3C und 3D jeweils für eine Bauform der Radial-Axial-Lager gemäß Figuren 4A, bis 4C zusammengefasst, wobei die Kennzeichnung "A", "B" und "C" die jeweilige Bauform bezeichnet. Die Prozentangaben an den Balken der Bauformen "B" und "C" geben die Belastungsgrenzen relativ zu jener der Bauform "A" an.

Als, Belastungsgrenze ist der Wert des Verdrehmoments angegeben, bei dem eine 5%-ige plastische Verformung im Bereich der Verbindungslasche 22 bzw. der korrespondierenden Ausnehmung 24 eintritt. Die Verformung oder ein Bruch kann zu einem Lösen der Verbindung zwischen der Lagerhalbschale und der Anlaufscheibe führen. Hierdurch würde die Anlaufscheibe aus dem Lagersitz fallen können und eine korrekte axiale Kurbelwellenführung wäre nicht mehr gewährleistet. Schlimmstenfalls können sogar Bruchstücke entstehen, welche in den Schmierspalt zwischen dem Gleitlager (Radial- und/oder Axialteil) und dem Gegenläufer (Kurbelwelle) gelangen und dort noch größere Schäden verursachen können.

Es zeigt sich, dass die Bauform "B" in allen vier Belastungsfällen der Bauform "A" des gebauten Bundlagers unterlegen ist. Dies ist darauf zurückzuführen, dass mangels äußerer Abstützung bei der Bauform gemäß Figur "B" jeweils Kippmomente entstehen, welche die Belastung der Verbindungslaschen 222 erhöht.

Das erfindungsgemäße Radial-Axial-Gleitlager (Bauform "C") zeigt gegenüber der Bauform "B" in allen Belastungsfällen bessere Werte. Im Vergleich zur dem gebauten Lager (Bauform "A") ist nur im Fall der reinen Drehmomentbelastung gemäß Belastungsfall nach Figur 3A eine leicht verminderte Belastbarkeit von 1,7% feststellbar. In allen drei übrigen Belastungsfällen ist die maximale Belastbarkeit deutlich gegenüber jener der Bauform "A" erhöht.

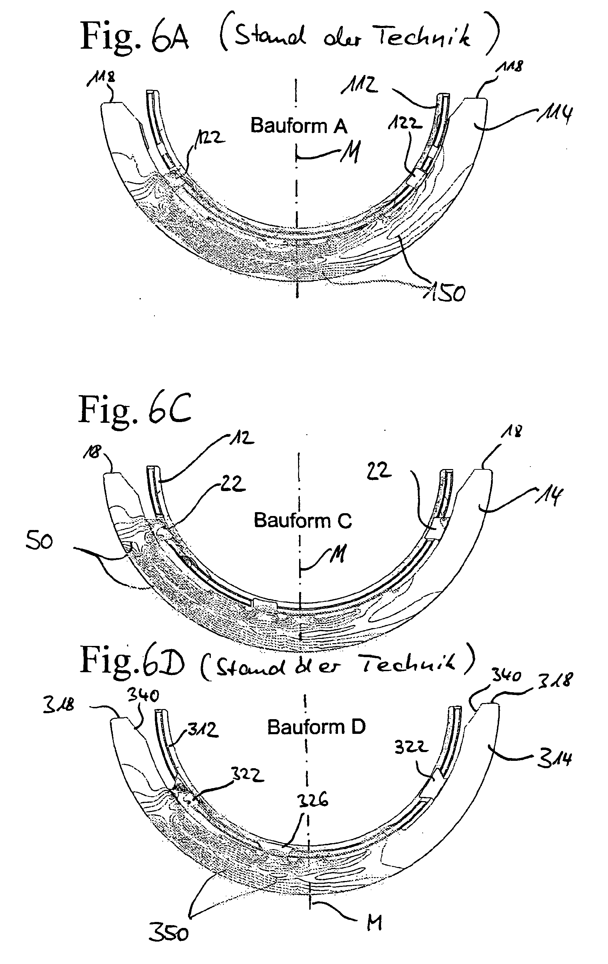

In den Figuren 6A und 6D sind zwei Radial-Axial-Lager (genauer Lagerhälften) bekannter Bauart gezeigt. Figur 6A entspricht der Bauform gemäß Figur 4A, wobei zwecks vereinfachter Illustration die beiden äußeren verklinkten Verbindungslaschen 124 weggelassen wurden. Im Übrigen stimmen die Lagergeometrien überein.

Bauform C gemäß Figur 6C entspricht identisch der erfindungsgemäßen Bauform der Lagerhälfte aus den Figuren 1, 2 und 4C.

Bauform D gemäß Figur 6D ist eine hierin erstmals beschriebene, bekannte Bauform, wie sie beispielsweise aus der DE 40 15 256 A1 bekannt ist. Die Lagerhälfte besteht wiederum aus einem Radiallagerteil 312 und einer Anlaufscheibe 314, welche formschlüssig mittels zweier äußerer Verbindungslaschen 322 und einer mittleren Verbindungslasche 326 miteinander verbunden sind. Der markanteste Unterschied zur Bauform H und zur Bauform C ist die Geometrie aller drei Verbindungslaschen sowie der hierzu komplementären Ausnehmungen in dem Radiallagerteil 312. Die drei Verbindungslaschen 322, 326 sind schwalbenschwanzförmig ausgebildet, d. h. sie haben einen radial nach innen gerichtet zunehmenden Querschnitt, so dass sie in radialer Richtung betrachtet beidseits Hinterschneidungen bilden. Die jeweils zugeordnete Aussparung in dem Radiallagerteil weist hierzu komplementäre Innen- und Außenkanten auf, so dass bereits eine der drei Verbindungslaschen 322, 326 genügt, um die Anlaufscheibe 314 in radialer Richtung bezüglich des Radiallagerteils 312 zu fixieren. Ansonsten unterscheiden sich die Geometrien darin, dass die beiden äußeren Verbindungslaschen 322 der bekannten Bauform D gegenüber den beiden äußeren Verbindungslaschen 22 der erfindungsgemäßen Bauform C näher an der Mittellinie M angeordnet sind, so dass der Zwischenwinkel der beiden äußeren Verbindungslaschen 322 kleiner ist als der Zwischenwinkel zwischen den beiden äußeren Verbindungslaschen 22. Der Grund für diese veränderte Geometrie ist der bereits weiter oben angesprochene Sparschnitt, der aufgrund der sich radial einwärts aufweitenden Verbindungslaschen 322 nur realisiert werden kann, wenn diese weiter zur Mittellinie M hin angeordnet sind. Während die beiden äußeren Verbindungslaschen 322 der bekannten Bauform D in Umfangsrichtung an derselben Stelle angeordnet, wie die Verbindungslaschen 22 der erfindungsgemäßen Bauform C und würde man die beiden bogenförmigen Ausnehmungen 340, deren Radius dem Außenumfang der Anlaufscheibe 314 entspricht, gedanklich fortsetzen, so würden diese Ausnehmungen, also der Schnitt der aus dem Bandmaterial nachfolgend ausgestanzten Anlaufscheibe, auch die äußere Ecke der äußeren Verbindungslaschen 322 anschneiden.

Die Figuren 6A bis 6D zeigen die drei Bauformen jeweils in ihrem maximalen Belastungszustand bei dem Belastungsfall, der in Figur 3B dargestellt ist. Die Belastung führt jeweils zu einer Verschiebung der Anlaufscheiben gegenüber den Radiallagerteilen, wie anhand der unterschiedlichen Spaltbreiten zwischen den Anlaufscheiben und den Radiallagerteilen auf beiden Seiten der Mittellinie zu erkennen ist, einer Spannungsverteilung innerhalb der Anlaufscheiben und dem Radiallagerteil, die in Form von Isolinien 50, 150 bzw. 350 dargestellt sind, und schließlich zu einer Deformierung der Anlaufscheiben insgesamt sowie der Verbindungslaschen im besonderen.

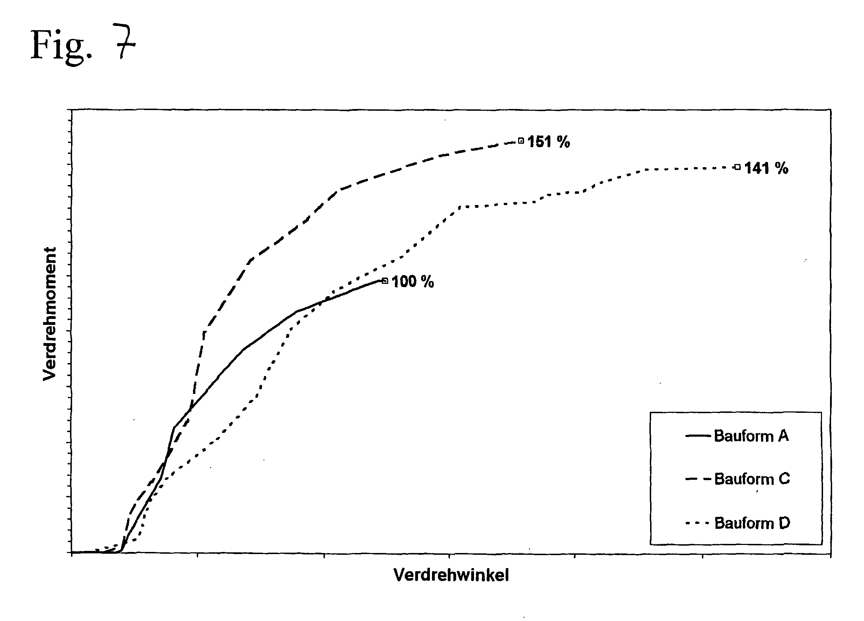

In Figur 7 ist für den Belastungsfall gemäß Figur 3B und die Bauformen aus den Figuren 6A bis 6D der Zusammenhang zwischen dem ausgeübten Verdrehmoment und dem bauformspezifischen hieraus resultierenden Verdrehwinkel der Anlaufscheiben gezeigt. Als Verdrehwinkel wird der Winkel verstanden, um den eine gedachte Verbindungslinie zwischen den beiden umfänglichen Enden 18, 118 bzw. 318 der Anlaufscheiben gegenüber ihrer (horizontalen) Ausgangsposition geneigt wird. Die durchgezogene Linie beschreibt den Zusammenhang im Fall der bekannten Bauform A. Die Kurve zeigt, dass das maximale Verdrehmoment, welches hier als Referenzwert (100%) angenommen wird, bereits bei einem kleinen Verdrehwinkel erreicht wird. Bei weiterer Verdrehung, d. h. bei zunehmendem Verdrehwinkel würde man feststellen, dass das hierzu erforderliche Verdrehmoment wieder abfällt. Alle drei Kurven sind nach diesem Prinzip aufgetragen, d. h. sie enden bei ihrem jeweils maximal erreichbaren Verdrehmoment. Während die bekannte Bauform D einem um 41 % größeren Verdrehmoment als die bekannte Bauform A stand hält, vgl. punktierte Linie, erreicht sie hierbei einen mehr als doppelt so großen Verdrehwinkel. In einem so großen Belastungsfall ist die Geometrie des Radial-Axial-Lagers und insbesondere der Anlaufscheibe jedoch schon so verändert, dass dauerhafte Schädigungen des Lagers und/oder des Gegenläufers die Folge sein können. Wie der gestrichelten Linie zu entnehmen ist, hält die erfindungsgemäße Bauform C dem größten Verdrehmoment, das immerhin 51 % größer als das maximale Verdrehmoment der Bauform A ist, stand und erreicht dieses bei einem nur geringfügig größeren Verdrehwinkel als die bekannte Bauform A. Insgesamt erweist sich also die Bauform C als standhafteste Lösung, die gleichzeitig noch einen Sparschnitt erlaubt.

Obgleich das gezeigte Ausführungsbeispiel ein Radial-Axial-Lager ist, welches zwei Anlaufscheiben aufweist, ist die Erfindung nicht hierauf beschränkt sondern kann auch auf einseitige Bundlager Anwendung finden. Ebenfalls kann der Radiallagerteil abweichend von dem gezeigten Ausführungsbeispiel einer halbzylindrische Lagerschale auch als Buchse ausgebildet sein. Obgleich die umfänglichen Enden der Anlaufscheiben gemäß dem gezeigten Beispiel der Erfindung gegenüber den Teilflächen des Radiallagerteils zurückversetzt, also kürzer sind, wird aus dem Vorstehenden klar, dass die Erfindung nicht durch dieses geometrische Detail beschränkt ist. Insbesondere steht es der Erfindung nicht entgegen die umfänglichen Enden der Anlaufscheibe auch über die halbierende Teilebene hinaus zu erstrecken.

### Bezugszeichenliste

- 10: Radial-Axial-Lager
- 12: Radiallagerteil
- 14: Anlaufscheibe
- 16: Teilfläche
- 18: umfängliches Ende der Anlaufscheibe
- 20: innerer Rand der Anlaufscheibe
- 22: äußere Verbindungslasche
- 23: Innenkante der Verbindungslasche
- 23a: Außenkante der Verbindungslasche
- 24: radial äußere, axial stirnseitige Ausnehmung
- 25: Innenkante der Ausnehmung
- 25a: Außenkante der Ausnehmung
- 26: Lauffläche des Radiallagerteils
- 27: Ölnut
- 28: Lauffläche der Anlaufscheibe
- 29: Ölbohrung
- 30: Nut
- 32: mittlere Verbindungslasche
- 34: mittlere Ausnehmung
- 36: Vorsprung
- 38: Schweißverbindung
- 40: bogenförmige Ausnehmung
- 42: Abstützung
- 50: Isolinien

- T: Teilebene
- M: Mittellinie
- α: Winkel zwischen Innenkante der Verbindungslasche und Tangente

### Stand der Technik

- 112: Radiallagerteil
- 114: Anlaufscheibe
- 118: umfängliches Ende der Anlaufscheibe
- 122: äußere Verbindungslasche
- 124: verklinkte Verbindungslasche
- 126: zentrale Verbindungslasche
- 144: äußere Abstützung
- 150: Isolinien

- 212: Radiallagerteil
- 214: Anlaufscheibe
- 222: äußere Verbindungslasche
- 226: mittlere Verbindungslasche
- 228: Vorsprung

- 312: Radiallagerteil
- 314: Anlaufscheibe
- 318: umfängliches Ende der Anlaufscheibe
- 322: äußere Verbindungslasche
- 326: mittlere Verbindungslasche
- 340: bogenförmige Ausnehmung
- 350: Isolinien

## Patentansprüche

1. Anlaufscheibe (14) in Form eines halbkreisförmigen Flanschringes mit wenigstens zwei am inneren Rand der Anlaufscheibe (14) radial einwärts gerichteten äußeren Verbindungslaschen (22) zur Verbindung mit einem Radiallagerteil (12), welche in Umfangsrichtung beidseits einer gedachten Mittellinie (M) der Anlaufscheibe (14) angeordnet sind und jeweils eine der Mittellinie (M) zugewandte Innenkante (23) und eine der Mittellinie (M) abgewandte Außenkante (23a) aufweisen,
**dadurch gekennzeichnet,**
**dass** die Innenkanten (23) jeweils mit einer in der Mitte der Verbindungslasche (22) an den von der Anlaufscheibe (14) beschriebenen Halbkreis angelegten Tangente auf der Innenseite einen Winkel (α) einschließen, der zwischen 45° und 85° liegt, und dass die Außenkante (23a) parallel zu der jeweiligen Innenkante (23) verläuft und die äußeren Verbindungslaschen (22) beabstandet von einer den Flanschring halbierenden Teilebene (T) angeordnet sind.

2. Anlaufscheibe (14) nach Anspruch 1, **dadurch gekennzeichnet, dass** die Innenkanten (23) der äußeren Verbindungslaschen (22) parallel zur Teilebene (T) verlaufen oder einen Winkel mit dieser einschließen, der nicht größer als ±15° ist.

3. Anlaufscheibe (14) nach einem der vorstehenden Ansprüche,
**dadurch gekennzeichnet,**
**dass** die äußeren Verbindungslaschen (22) symmetrisch zur Mittellinie (M) angeordnet sind.

4. Anlaufscheibe (14) nach einem der vorstehenden Ansprüche,
**gekennzeichnet durch**
eine dritte am inneren Rand angeordnete, radial einwärts gerichtete mittlere Verbindungslasche (32), welche versetzt zur Mittellinie (M) angeordnet ist.

5. Anlaufscheibe (14) nach einem der vorstehenden Ansprüche,
**gekennzeichnet durch**
zwei am ihrem inneren Rand angeordnete, radial einwärts gerichtete Abstützungen (42).

6. Anlaufscheibe (14) nach Anspruch 5, **dadurch gekennzeichnet, dass** die Abstützungen (42) symmetrisch beidseits der Mittellinie (M) und innerhalb der wenigstens zwei Verbindungslaschen (22) angeordnet sind.

7. Radial-Axial-Lager (10) mit einem Radiallagerteil (12) und einer mit dem Radiallagerteil (12) verbundenen Anlaufscheibe (14) nach einem der vorstehenden Ansprüche, wobei die äußeren Verbindungslaschen (22) in korrespondierende, stirnseitige äußere Ausnehmungen (24) in dem Radiallagerteil (12) eingreifen, welche jeweils eine der Mittellinie (M) der Anlaufscheibe (14) zugewandte Innenkante (25), die mit einer in der Mitte der Ausnehmungen (24) an den von dem Radiallagerteil (12) beschriebenen Kreis oder Halbkreis angelegten Tangente auf der Innenseite einen Winkel (α) einschließt, der zwischen 45° und 85° liegt, und jeweils eine der Mittellinie (M) der Anlaufscheibe (14) abgewandte Außenkante (25a) aufweisen, die parallel zu der jeweiligen Innenkante (25) verläuft und die Ausnehmungen (24) beabstandet von einer den Flanschring halbierenden Teilebene (T) angeordnet sind.

8. Radial-Axial-Lager (10) nach Anspruch 7, **dadurch gekennzeichnet,**
**dass** die der Mittellinie (M) zugewandten Innenkanten (25) der Ausnehmungen (24) parallel zu der Teilebene (T) verlaufen oder einen Winkel mit dieser einschließen, der nicht größer als ±15° ist.

9. Radial-Axial-Lager (10) nach einem der Ansprüche 7 oder 8, **dadurch gekennzeichnet,**
**dass** die Anlaufscheibe (14) mit dem Radiallagerteil (12) mittels einer Schweißverbindung (38) verbunden ist.

10. Radial-Axial-Lager (10) nach Anspruch 9, **dadurch gekennzeichnet,**
**dass** die Schweißverbindung (38) als Sollbruchstelle ausgelegt ist, die bei Anlauf des zu lagernden Gegenläufers bricht.

11. Radial-Axial-Lager (10) nach Anspruch 9 oder 10, **dadurch gekennzeichnet,**
**dass** die Anlaufscheibe (14) mit dem Radiallagerteil (12) im Scheitelbereich verschweißt ist.

12. Radial-Axial-Lager (10) nach einem der Ansprüche 7 bis 11, **dadurch gekennzeichnet,**
**dass** der Radiallagerteil (12) eine Lagerhalbschale ist.

## Claims

1. Thrust washer (14) in the form of a semi-circular flange ring having at least two outer connection tabs (22) which are directed radially inwards at the inner edge of the thrust washer (14), in order to be connected to a radial bearing member (12) and which are arranged in a peripheral direction at both sides of a notional centre line (M) of the thrust washer (14) and each have an inner edge (23) which is directed towards the centre line (M) and an outer edge (23a) which is directed away from the centre line (M),
**characterised in that**
the inner edges (23) in each case define at the inner side, with a tangent which is defined on the semi-circle described by the thrust washer (14) in the centre of the connection tab (22) an angle (α) which is between 45° and 85°, and **in that** the outer edge (23a) extends parallel with the respective inner edge (23) and the outer connection tabs (22) are arranged with spacing from a plane of section (T) which bisects the flange ring.

2. Thrust washer (14) according to claim 1, **characterised in that** the inner edges (23) of the outer connection tabs (22) extend parallel with the plane of section (T) or define therewith an angle which is not greater than ±15°.

3. Thrust washer (14) according to either of the preceding claims, **characterised in that**
the outer connection tabs (22) are arranged symmetrically with respect to the centre line (M).

4. Thrust washer (14) according to any one of the preceding claims, **characterised by**
a third central connection tab (32) which is arranged on the inner edge, which is directed radially inwards and which is arranged offset relative to the centre line (M).

5. Thrust washer (14) according to any one of the preceding claims, **characterised by**
two supports (42) which are arranged on the inner edge thereof and which are directed radially inwards.

6. Thrust washer (14) according to claim 5, **characterised in that** the supports (42) are arranged symmetrically at both sides of the centre line (M) and within the at least two connection tabs (22).

7. Radial axial bearing (10) having a radial bearing member (12) and a thrust washer (14) which is connected to the radial bearing member (12) according to any one of the preceding claims, the outer connection tabs (22) engaging in corresponding end-face external recesses (24) in the radial bearing member (12), which each have an inner edge (25) which is directed towards the centre line (M) of the thrust washer (14) and which defines at the inner side, with a tangent defined by the circle or semi-circle described by the radial bearing member (12) in the centre of the recesses (24), an angle (α) which is between 45° and 85°, and which each have an outer edge (25a) which is directed away from the centre line (M) of the thrust washer (14) and which extends parallel with the respective inner edge (25), and the recesses (24) are arranged with spacing from a plane of section (T) which bisects the flange ring.

8. Radial axial bearing (10) according to claim 7, **characterised in that**
the inner edges (25) of the recesses (24) directed towards the centre line (M) extend parallel with the plane of section (T) or define therewith an angle which is not greater than ±15°.

9. Radial axial bearing (10) according to either claim 7 or claim 8, **characterised in that**
the thrust washer (14) is connected to the radial bearing member (12) by means of a weld connection (38).

10. Radial axial bearing (10) according to claim 9,
**characterised in that**
the weld connection (38) is configured as a desired breaking point which breaks when the counter-member which is intended to be supported is brought into abutment.

11. Radial axial bearing (10) according to claim 9 or claim 10,
**characterised in that**
the thrust washer (14) is welded to the radial bearing member (12) in the region of the apex.

12. Radial axial bearing (10) according to any one of claims 7 to 11, **characterised in that**
the radial bearing member (12) is a bearing half-shell.

## Revendications

1. Bague de portée (14) sous la forme d'une bride annulaire semi-circulaire avec au moins deux pattes de raccordement extérieures (22) sur le bord intérieur de la bague de portée (14), dirigées radialement vers l'intérieur et destinées au raccordement à un élément de palier radial (12), pattes qui sont disposées en direction circonférentielle de part et d'autre d'une ligne médiane imaginaire (M) de la bague de portée (14) et qui présentent chacune un bord intérieur (23) tourné vers la ligne médiane (M) et un bord extérieur (23a) opposé à la ligne médiane (M),
**caractérisée en ce que** les bords intérieurs (23) forment chacun sur le côté intérieur un angle (α) compris entre 45° et 85° avec une tangente au demi-cercle décrit par la bague de portée (14), laquelle tangente passe par le centre de la patte de raccordement (22), et **en ce que** le bord extérieur (23a) s'étend parallèlement au bord intérieur respectif (23) et les pattes de raccordement extérieures (22) sont disposées à distance d'un plan de séparation (T) partageant en deux la bride annulaire.

2. Bague de portée (14) selon la revendication 1, **caractérisée en ce que** les bords intérieurs (23) des pattes de raccordement extérieures (22) s'étendent parallèlement au plan de séparation (T) ou forment avec ce dernier un angle qui n'est pas supérieur à ±15°.

3. Bague de portée (14) selon l'une des revendications précédentes, **caractérisée en ce que** les pattes de raccordement extérieures (22) sont disposées symétriquement par rapport à la ligne médiane (M).

4. Bague de portée (14) selon l'une des revendications précédentes, **caractérisée par** une troisième patte de raccordement (32) disposée sur le bord intérieur, centrale, dirigée radialement vers l'intérieur, patte qui est disposée en étant décalée par rapport à la ligne médiane (M).

5. Bague de portée (14) selon l'une des revendications précédentes, **caractérisée par** deux supports (42) disposés sur son bord intérieur en étant dirigés radialement vers l'intérieur.

6. Bague de portée (14) selon la revendication 5, **caractérisée en ce que** les supports (42) sont disposés symétriquement de part et d'autre de la ligne médiane (M) et à l'intérieur des au moins deux pattes de raccordement (22).

7. Palier (10) à charge axiale et radiale, avec un élément de palier radial (12) et une bague de portée (14) selon l'une des revendications précédentes raccordée à l'élément de palier radial (12), sachant que les pattes de raccordement extérieures (22) s'engagent dans des évidements extérieurs frontaux correspondants (24) dans l'élément de palier radial (12), évidements qui présentent chacun un bord intérieur (25) tourné vers la ligne médiane (M) de la bague de portée (14), bord qui forme sur le côté intérieur un angle (α) compris entre 45° et 85° avec une tangente au cercle ou demi-cercle décrit par l'élément de palier radial (12), laquelle tangente passe par le centre des évidements (24), et qui présentent chacun un bord extérieur (25a) opposé à la ligne médiane (M) de la bague de portée (14), bord qui s'étend parallèlement au bord intérieur respectif (25), et sachant que les évidements (24) sont disposés à distance d'un plan de séparation (T) partageant en deux la bride annulaire.

8. Palier (10) à charge axiale et radiale selon la revendication 7, **caractérisé en ce que** les bords intérieurs (25) des évidements (24), qui sont tournés vers la ligne médiane (M), s'étendent parallèlement au plan de séparation (T) ou forment avec ce dernier un angle qui n'est pas supérieur à ±15°.

9. Palier (10) à charge axiale et radiale selon la revendication 7 ou 8, **caractérisé en ce que** la bague de portée (14) est raccordée à l'élément de palier radial (12) au moyen d'une liaison soudée (38).

10. Palier (10) à charge axiale et radiale selon la revendication 9, **caractérisé en ce que** la liaison soudée (38) est conçue comme zone destinée à la rupture, qui se rompt lors de la mise en marche du contre-rotor à monter.

11. Palier (10) à charge axiale et radiale selon la revendication 9 ou 10, **caractérisé en ce que** la bague de portée (14) est soudée à l'élément de palier radial (12) dans la région du sommet.

12. Palier (10) à charge axiale et radiale selon l'une des revendications 7 à 11, **caractérisé en ce que** l'élément de palier radial (12) est une demi-coquille de coussinet.
